# EUROPÄISCHE PATENTANMELDUNG

(11) **EP 0 774 289 A1**
(43) Veröffentlichungstag der Anmeldung: **21.05.1997**
(21) Anmeldenummer: 96118292.0
(22) Anmeldetag: 14.11.1996
(51) Int. Cl.: B01D 46/04, B01D 29/11, B01D 29/66

(54) **Filtervorrichtung sowie Verfahren für deren Betrieb**

(30) Priorität: 20.11.1995 DE 19543275
(71) Anmelder: Kvaerner Bison GmbH, 31813 Springe (DE)
(72) Erfinder: Bartling, Werner, 31008 Elze (DE)
(74) Vertreter: Finsterwald, Manfred, Dipl.-Ing., Dipl.-Wirtsch.-Ing.

(57) **Zusammenfassung**

Die Erfindung betrifft eine Filteranlage mit wenigstens einem Filterelement (3) zum Filtern eines insbesondere partikelförmige Verunreinigungen enthaltenden Rohgases, der über eine Rohgasleitung (21) ein zu filternder Rohgasstrom zuführbar ist, wobei zumindest zwei Filtermodule (1) mit jeweils wenigstens einem Filterelement (3) vorgesehen sind, jedes Filtermodul (1) mit der Rohgasleitung (21) über eine Modul-Rohgasleitung (22) strömungstechnisch verbunden ist, durch die dem jeweiligen Filtermodul (1) ein Teil des Rohgasstromes zuführbar ist, und jede Modul-Rohgasleitung (22) ein Absperrorgan (8) aufweist, durch das zur Abreinigung des Filterelementes (3) des jeweiligen Filtermoduls (1) die Zufuhr des jeweiligen Teil-Rohgasstromes unterbrechbar ist.

## Beschreibung

Die Erfindung betrifft ein Verfahren zum Abreinigen wenigstens eines Filterelementes einer Filteranlage, ein Filtermodul für eine Filteranlage, ein Verfahren zum Filtern eines insbesondere partikelförmige Verunreinigungen enthaltenden Rohgases in einer Filteranlage sowie eine Filteranlage mit wenigstens einem Filterelement jeweils nach dem Oberbegriff der unabhängigen Ansprüche 1, 7, 21 bzw. 27.

Die Filterkapazität bekannter Filteranlagen ist durch deren konstruktive Eigenschaften im wesentlichen festgelegt, so daß die Abmessungen einer Filteranlage umso größer werden, je größer die jeweils erforderliche Filterkapazität ist, da entweder eine größere Anzahl von Filterelementen oder größere Filterelemente verwendet werden müssen, um eine entsprechend leistungsfähigere Filteranlage bereitstellen zu können. In bestimmten Fällen können die Abmessungen einer Filteranlage so groß werden, daß sowohl deren Planung und Herstellung als auch deren Transport und Aufbau vor Ort äußerst aufwendig und kostspielig werden.

Darüber hinaus muß auch das System zur Abreinigung der Filterelemente an die jeweilige Filterkapazität, d.h. die Anzahl und / oder Größe der Filterelemente, angepaßt werden, wodurch sich Aufwand und Kosten weiter erhöhen.

Eine Aufgabe der Erfindung besteht darin, eine Filteranlage, deren Filterkapazität auf einfache Weise veränderbar ist, sowie deren Betrieb verbessernde Verfahren zu schaffen.

Diese Aufgabe wird erfindungsgemäß im wesentlichen durch die Merkmale in den kennzeichnenden Teilen der unabhängigen Ansprüche 1, 7, 21 bzw. 27 gelöst.

Durch das erfindungsgemäße Abreinigungsverfahren für Filterelemente einer Filteranlage wird eine Verunreinigungen von den Filterelementen lösende Druckluftströmung mit einer die gelösten Verunreinigungen nach außen abtransportierenden Saugluftströmung, die vorzugsweise auch dazu beiträgt, Verunreinigungen von den Filterelementen zu lösen, auf vorteilhafte Weise kombiniert und auf diese Weise eine äußerst wirkungsvolle und schnelle Abreinigung der Filteranlage erzielt.

Dieses Abreinigungsverfahren kann erfindungsgemäß in einem Filtermodul mit wenigstens einem Filterelement eingesetzt werden, welches zu diesem Zweck beispielsweise Druckluftdüsen und eine mit einer Saugeinrichtung koppelbare Absaugöffnung aufweist. Anstelle der Druckluftdüsen kann ein Teil des gefilterten Reingasstromes unter Druck zurück in das Filtermodul geführt werden, um auf vorteilhafte Weise ohne die Zufuhr externer Druckluft und ausschließlich mit Prozeßluft auf im wesentlichen konstanter Temperatur Verunreinigungen von den Filterelementen zu lösen.

Eine gemäß der Erfindung ausgebildete Filteranlage besteht aus wenigstens zwei Filtermodulen, wobei die Zufuhr von zu filterndem Rohgas modulweise unterbrochen werden kann. Auf diese Weise kann die Filteranlage mit Hilfe des erfindungsgemäßen Filterverfahrens betrieben werden, nach welchem die einzelnen Filtermodule modulweise nacheinander abgereinigt werden.

Die erfindungsgemäße Filteranlage kann daher durch geeignete Wahl der Anzahl von Filtermodulen auf einfache Weise an die jeweils erforderliche Filterkapazität angepaßt und nachträglich auch erweitert oder verkleinert werden. Außerdem ist bei im wesentlichen baugleicher Ausführung der Filtermodule die für die modulweise erfolgende Abreinigung aufzubringende Leistung konstant und damit unabhängig von der Gesamt-Filterkapazität.

Eine in besonderem Maße verbesserte Filteranlage, die alle durch die Erfindung geschaffenen Vorteile vereinigt, ergibt sich dann, wenn diese aus den erfindungsgemäß abreinigbaren Filtermodule aufgebaut ist und nach dem Filterverfahren gemäß der Erfindung betrieben wird.

Eine derartige Filteranlage ist wegen der erfindungsgemäß äußerst wirkungsvollen Abreinigung sehr effektiv und kann darüber hinaus wegen ihres Modulaufbaus praktisch an jeden Anwendungsfall angepaßt sowie kostengünstig geplant, hergestellt, transportiert und installiert werden.

Vorteilhafte Ausgestaltungen der Erfindung sind in den abhängigen Ansprüchen angegeben.

Die Erfindung wird im folgenden beispielhaft anhand der Zeichnung beschrieben; in dieser zeigt:
- Figur 1: die Schnittdarstellung einer Seitenansicht einer Ausführungsform eines erfindungsgemäßen Filtermoduls,
- Figur 2: die Schnittdarstellung einer Seitenansicht des oberen Bereiches einer anderen Ausführungsform eines Filtermoduls gemäß der Erfindung,
- Figur 3: schematisch die Anordnung von drei erfindungsgemäßen Filtermodulen gemäß Figur 2 mit einer Anordnung zur Teilrückführung eines Reingasstromes als Druckluft, und
- Figur 4: schematisch den Aufbau einer vier Filtermodule umfassenden Filteranlage gemäß der Erfindung.

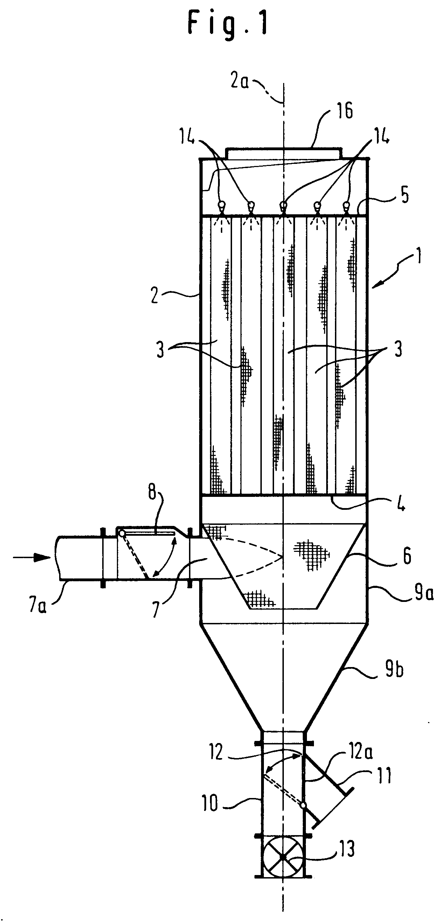

Nach Figur 1 umfaßt ein gemäß der Erfindung ausgebildetes Filtermodul 1 ein zylinderförmiges Gehäuse 2 mit im wesentlichen kreisförmigem Querschnitt. Im Gehäuse 2 sind zwei in Richtung der Gehäuselängsachse 2 a beabstandete Filterböden 4, 5 vorgesehen, zwischen denen sich mehrere Filterelemente 3 etwa parallel zur Gehäuselängsachse 2 a erstrecken. Die Abstände der Filterelemente 3 untereinander werden in Abhängigkeit von den jeweiligen Bedingungen gewählt.

Die Filterelemente 3 sind als röhrenförmige Hohlkörper, insbesondere als sogenannte Filterschläuche, Filtertaschen oder Filterkerzen ausgebildet, deren Umfangswand zumindest im wesentlichen aus einem Filtermedium besteht, das für die jeweils herauszufilternden Verunreinigungen geeignet ist.

Vorzugsweise sind die Filterelemente 3 in mehreren etwa konzentrischen Kreisen um eine im unteren Filterboden 4 ausgebildete und zur Gehäuselängsachse 2 a konzentrische Öffnung herum angeordnet. Die Befestigung der Filterelemente 3 an den Filterböden 4, 5 kann auf beliebige Weise erfolgen.

Ein Zylinderabschnitt 9 a bildet das Gehäuse 2 unterhalb des unteren Filterbodens 4 und ist mit einem Einlaß 7 für die herauszufilternden Verunreinigungen enthaltendes Rohgas versehen, an den ein mit einem vorzugsweise pneumatisch oder elektrisch betätigbaren Absperrorgan 8 versehener Zufuhrstutzen 7 a gekoppelt ist. Das Absperrorgan 8 ist in Figur 1 in seiner den Zufuhrstutzen 7 a freigebenden Stellung durch eine durchgezogene und in seiner Absperrstellung durch eine strichpunktierte Linie dargestellt.

An seinem unteren Ende geht der Zylinderabschnitts 9 a in einen sich verjüngenden Trichterabschnitt 9 b über, an den sich wiederum unten ein Endstutzen 10 anschließt, an dessen freien unteren Ende eine bevorzugt als Zellenradschleuse ausgebildete Entnahmeschleuse 13 vorgesehen ist, über die aus dem Rohgas entfernte Verunreinigungen nach außen abtransportierbar sind.

Außerdem ist seitlich am Endstutzen 10 eine Absaugöffnung 12 ausgebildet, an die ein Absaugstutzen 11 gekoppelt ist. Die Größe der Absaugöffnung 12 ist mittels eines ebenfalls bevorzugt elektrisch oder pneumatisch betreibbaren Regelorgans 12 a veränderbar, welches entweder am Absaugstutzen 11 oder am Endstutzen 10 angebracht und aus einer in Figur 1 durch eine durchgezogene Linie dargestellten Stellung, in der es die Absaugöffnung 12 vollständig verschließt, in den Endstutzen 10 hinein schwenkbar ist, um strömungstechnisch den Absaugstutzen 11 mit dem Gehäuse 2 zu verbinden und die Entnahmeschleuse 13 von diesem abzutrennen. Diese Stellung des Regelorgans 12 a ist in Figur 1 durch eine strichpunktierte Linie gezeigt.

Unterhalb des unteren Filterbodens 4 ist im Zylinderabschnitt 9 a des Gehäuses 2 ein zyklonartiger Vorabscheider 6 als Vorreinigungs-Einrichtung angeordnet, in den das über den Einlaß 7 eintretende Rohgas zuerst gelangt. Der Zufuhrstutzen 7 a ist so angeordnet, daß das Rohgas im wesentlichen tangential in den Zyklon-Vorabscheider 6 eintritt.

Im Bereich des oberen Filterbodens 5 sind an eine in Figur 1 nicht dargestellte Druckluftquelle koppelbare Druckluftdüsen 14 vorgesehen, die grundsätzlich beliebig angeordnet sein können. Entscheidend ist, daß die Druckluftdüsen 14 so ausgerichtet sind, daß die von ihnen erzeugten Druckluftströmungen die vom Filtermedium herausgefilterten Verunreinigungen optimal von den Filterelementen 3 lösen können.

Vorzugsweise ist dazu zumindest ein Teil der Druckluftdüsen 14 so angeordnet, daß Druckluftströmungen in die Filterelemente 3 hinein erzeugt werden, um durch diese der normalen Bewegung des verunreinigten Rohgases durch das Filterelement entgegengesetzte Strömung ein besonders wirkungsvolles Herausblasen der Verunreinigungen aus dem Filtermedium zu erzielen.

Oberhalb des oberen Filterbodens 5 ist das Filtermodul 1 zum Abführen von gefiltertem Reingas entweder in die freie Atmosphäre oder in eine Reingasleitung ausgebildet. Außerdem ist am oberen Ende des Filtermoduls 1 wenigstens eine Klappe 16 vorgesehen, die als einen Zugang zum Filtermodul 1 ermöglichende Wartungs- und / oder als eine den Explosionsschutz gewährleistende Druckentlastungsklappe ausgebildet ist.

Im Filterbetrieb gelangt herauszufilternde Verunreinigungen enthaltendes Rohgas bei nicht aktiviertem Absperrorgan 8 über den Zufuhrstutzen 7 a zunächst in den Vorabscheider 6, in welchem ein großer Teil von insbesondere partikel- bzw. staubförmigen Verunreinigungen vorabgeschieden wird. Dieses Material fällt nach unten aus dem Vorabscheider 6 durch den Endstutzen 10 zur Entnahmeschleuse 13, da während des Filterbetriebs das Regelorgan 12 a die Absaugöffnung 12 verschließt.

Das vom vorabgeschiedenen Teil seiner Verunreinigungen befreite Rohgas gelangt aus dem Vorabscheider 6 über die im unteren Filterboden 4 vorgesehene zentrale Öffnung in den Filterelemente-Bereich des Gehäuses 2 und durchströmt das Filtermedium der Filterelemente 3 von außen nach innen, so daß das Filtermedium die im Rohgas noch enthaltenen Verunreinigungen zumindest im wesentlichen herausfiltert und das gefilterte Reingas im Inneren der Filterelemente 3 in Richtung des oberen Filterbodens 5 strömt und oberhalb von diesem nach außen abtransportiert wird.

Zur Abreinigung der Filterelemente 3 wird der Zufuhrstutzen 7 a mit Hilfe des Absperrorgans 8 verschlossen und so die Zufuhr von Rohgas zum Filtermodul 1 unterbrochen. Außerdem wird durch Betätigung des Regelorgans 12 a die Absaugöffnung 12 freigegeben.

Mittels der Druckluftdüsen 14 wird eine innerhalb und / oder außerhalb der röhrenförmigen Filterelemente 3 verlaufende und auf deren im wesentlichen vom Filtermedium gebildete Umfangswand gerichtete Druckluftströmung erzeugt, wodurch vom Filtermedium herausgefilterte Verunreinigungen von den Filterelementen 3 gelöst werden. Dieses Material fällt im Gehäuse 2 nach unten und wird über die Ansaugöffnung 12 mittels der an den Absaugstutzen 11 gekoppelten Saugeinrichtung abgesaugt.

Ein Vorteil dieses Abreinigungsverfahrens besteht darin, daß die Druckluftströmung und die Saugluftströmung im wesentlichen gleichgerichtet sind, wodurch der Abtransport der von den Filterelementen 3 gelösten Verunreinigungen erheblich beschleunigt wird, und daß durch die Unterbrechung des in das Filtermodul 1 eintretenden Rohgasstromes mittels des Absperrorgans 8 im Gehäuse 2 keine dem Abtransport der gelösten Verunreinigungen entgegenwirkende Gegenströmung in Richtung des oberen Filterbodens 5 vorhanden ist. Die Abreinigung des erfindungsgemäßen Filtermoduls 1 erfolgt somit unter den denkbar günstigsten Bedingungen und kann daher besonders wirkungsvoll und in kürzester Zeit durchgeführt werden.

Nach erfolgter Abreinigung wird die Absaugöffnung 12 wieder verschlossen und der Zufuhrstutzen 7 a wieder freigegeben.

Der zeitliche Ablauf der Abreinigung sowie die Intensität der Druckluft- und Saugluftströmung werden von einer in Figur 1 nicht dargestellten Steuereinheit geregelt. Bevorzugt erfolgt sowohl die Betätigung des Absperrorgans 8 und des Regelorgans 12 a als auch die Aktivierung der Druckluftquelle und der Saugeinrichtung im wesentlichen gleichzeitig. Die Druckluftströmung kann während der Abreinigungszeit mit konstanter oder wechselnder Intensität erzeugt werden und beispielsweise aus einzelnen Druckluftstößen in beliebig variierbaren Intervallen bestehen.

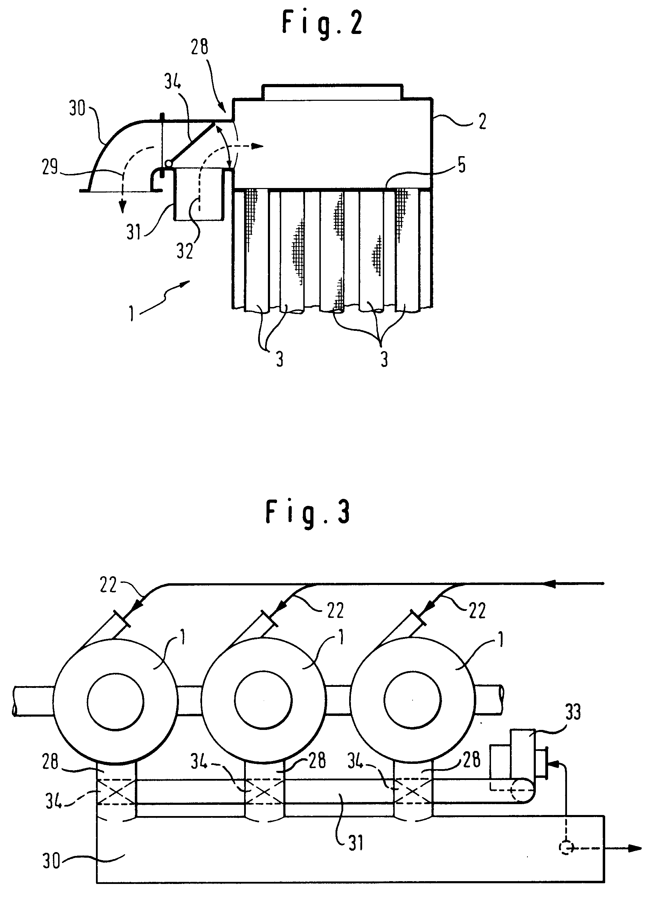

Figur 2 zeigt den oberen Bereich einer alternativen Ausführungsform eines erfindungsgemäßen Filtermoduls 1. Der gefilterte Reingasstrom 29 wird aus dem Gehäuse 2 über einen Auslaß 28 und eine Reingasleitung 30 abgeführt. Eine Druckluftleitung 31 mündet in die Reingasleitung 30 im Bereich des Auslasses 28. Ein von einer nicht dargestellten Steuereinheit betätigbares Regelorgan 34, das vorzugsweise als schwenkbare Absperrklappe ausgebildet ist, stellt in seiner in Figur 2 gezeigten Abreinigungsstellung eine Strömungsverbindung zwischen der Druckluftleitung 31 und dem Gehäuse-Bereich oberhalb der Filterelemente 3 her, wobei es gleichzeitig den Zugang zur Reingasleitung 30 unterbricht.

In der Ausführungsform eines erfindungsgemäßen Filtermoduls 1 gemäß Figur 2 wird bei sich in der Abreinigungsstellung befindendem Regelorgan 34 eine Druckluftströmung 32 in das Gehäuse 2 geführt, um Verunreinigungen von den Filterelementen 3 zu lösen. Die Anordnung von Druckluftdüsen wie beim Filtermodul 1 gemäß Figur 1 entfällt, wobei strömungstechnisch auch die Druckluftströmung 32 diejenigen Vorteile aufweist, die vorstehend anhand der Ausführungsform von Figur 1 für die Druckluftdüsen genannt wurden.

Nach erfolgter Abreinigung wird die Druckluftleitung 31 mittels des Regelorgans 34 verschlossen und die Strömungsverbindung zwischen Gehäuse 2 und Reingasleitung 30 zum Abführen des gefilterten Reingasstromes 29 wiederhergestellt.

Nach Figur 3 sind drei gemäß der Ausführungsform von Figur 2 ausgebildete erfindungsgemäße Filtermodule 1, die entsprechend der Ausführungsform von Figur 2 mittels einer Druckluftströmung abreinigbar sind, an eine gemeinsame Reingasleitung 30 zum Abführen der jeweils gefilterten Reingasströme angeschlossen. Zur Erzeugung der Druckluftströmung 32 für die Abreinigung der Filtermodule 1 ist ein Gebläse 33 vorgesehen, welches wenigstens einen Teil des Gesamt-Reingasstromes aus der Reingasleitung 30 absaugt und durch eine Druckluftleitung 31 dem jeweils abzureinigenden Filtermodul 1 zuführt.

Die Abreinigung der Filtermodule 1 erfolgt vorzugsweise nacheinander, so daß sich zu einem Zeitpunkt jeweils nur bei einem der Filtermodule 1 dessen Regelorgan 34 in der den jeweiligen Auslaß 28 mit der Druckluftleitung 31 strömungstechnisch verbindenden Abreinigungsstellung befindet. Die übrigen Filtermodule 1 befinden sich währenddessen im normalen Filterbetrieb, in welchem ihnen zu filterndes Rohgas über eine jeweilige Modul-Rohgasleitung 22 zugeführt wird und sie ihre jeweiligen gefilterten Reingasströme in die Reingasleitung 30 speisen, so daß eine Reingasströmung vorhanden ist, der stets zumindest ein für die Abreinigung des einen Filtermoduls 1 ausreichender Teil vom Gebläse 33 entnehmbar ist.

Der Vorteil dieser Art von Abreinigung besteht darin, daß keine externe Druckluftquelle erforderlich ist und ausschließlich die von der Filteranlage selbst erzeugte Prozeßluft verwendet wird, die eine im wesentlichen konstante Temperatur aufweist und auf diese Weise für gleichbleibende und die Abreinigung der Filterelemente begünstigende Verhältnisse sorgt.

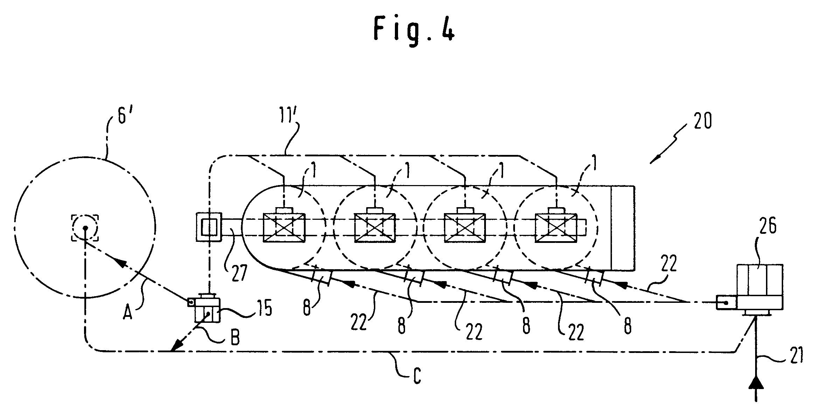

Figur 4 zeigt den prinzipiellen Aufbau einer erfindungsgemäßen Filteranlage 20, die vier Filtermodule 1 aufweist, welche vom in Figur 1 beschriebenen Typ sein können und/oder nach Art der anhand der Figuren 2 und 3 beschriebenen Module abgereinigt werden.

Die für den Zyklon-Vorabscheider erforderliche tangentiale Anordnung des mit dem Absperrorgan 8 versehenen Zufuhrstutzens ist in Figur 4 gut zu erkennen.

Jedem Filtermodul 1 wird zu filterndes Rohgas über eine eigene Modul-Rohgasleitung 22 zugeführt, die von einer zentralen Rohgasleitung 21 gespeist wird. In Strömungsrichtung vor der ersten Modul-Rohgasleitung 22 ist ein Gebläse 26 im Strömungsweg angeordnet, welches das zu filternde Rohgas in die einzelnen Filtermodule 1 treibt.

Die Absaugöffnung jedes Filtermoduls 1 ist über ihren Absaugstutzen an eine zentrale Absaugleitung 11' gekoppelt, an welche die Saugeinrichtung 15 angeschlossen ist. Von der Saugeinrichtung 15 strömen die aus den Filtermodulen 1 abgesaugten Verunreinigungen entweder direkt über eine Leitung B oder zunächst über eine Leitung A und einen Vorabscheider 6' in eine Leitung C, die vor dem Gebläse 26 in die Rohgasleitung 21 mündet. Auf diese Weise wird eine besonders wirkungsvolle Mehrfach-Filterung erzielt.

Die erfindungsgemäße Filteranlage 20 ist weiter mit einer zentralen Sammeleinrichtung 27 versehen, an die jedes Filtermodul 1 über seine Entnahmeschleuse gekoppelt ist und von der in den Filtermodulen 1 angesammelte Verunreinigungen abtransportiert werden.

Die Filterelemente der erfindungsgemäßen Filteranlage 20 werden modulweise derart abgereinigt, daß zu einem Zeitpunkt immer nur die Abreinigung eines einziges Filtermodul 1 erfolgt. Hierzu wird von einer in Figur 4 nicht dargestellten Steuereinheit das dem jeweils abzureinigenden Filtermodul 1 zugeordnete Absperrorgan 8 betätigt, um die entsprechende Modul-Rohgasleitung 22 zu verschließen. Danach erfolgt die Abreinigung dieses Filtermoduls 1 mittels Druck- und Saugluft, wie vorstehend anhand der Figur 1 bis 3 beschrieben wurde.

Nach einer vorbestimmten Zeitdauer, die sich beispielsweise nach der Art der herausgefilterten Verunreinigungen, der Beschaffenheit und / oder dem Verunreinigungsgrad der Filterelemente bemißt, wird die Druckluftzufuhr unterbrochen, die Absaugöffnung verschlossen und die Modul-Rohgasleitung 22 freigegeben, so daß das abgereinigte Filtermodul 1 der Filteranlage 20 wieder zur Filterung zur Verfügung steht.

Vorzugsweise erfolgt unmittelbar nach Wiederaufnahme des Filterbetriebs des einen die Abreinigung des nächsten Filtermoduls 1, indem von der Steuereinheit die jeweiligen Absperr- und Regelorgane entsprechend betätigt werden, so daß die Saugeinrichtung 15 im Dauerbetrieb arbeiten kann. Ebenso kann die in Figur 4 nicht dargestellte Druckluftquelle ununterbrochen betrieben und der Reihe nach mit den Druckluftdüsen der einzelnen Filtermodule 1 strömungstechnisch verbunden werden.

Ein Vorteil der erfindungsgemäßen Filteranlage 20 besteht also darin, daß unabhängig von der Anzahl der eingesetzten Filtermodule 1 und somit unabhängig von der Gesamt-Filterkapazität der Filteranlage 20 stets die gleiche von der Saugeinrichtung 15 und der Druckluftquelle bereitgestellte Leistung für die Abreinigung ausreicht. Auch bei einer großen Gesamt-Filterkapazität der Filteranlage 20 ist aufgrund deren Aufteilung in mehrere kleine Einheiten nur eine vergleichsweise geringe Abreinigungskapazität erforderlich. Darüber hinaus wird durch den Modul-Aufbau der Filteranlage 20 sowohl deren Herstellung als auch Transport und Aufbau vor Ort erheblich vereinfacht, so daß mit einer gemäß der Erfindung ausgebildeten Filteranlage 20 eine beträchtliche Kostenreduzierung erzielbar ist.

Grundsätzlich können für die erfindungsgemäße Filteranlage 20 beliebige Filtermodule 1 verwendet werden. So kann beispielsweise die Abreinigung der Filtermodule 1 lediglich entweder mittels Druckluft oder Saugluft erfolgen. Es kann auch auf den moduleigenen Vorabscheider verzichtet und lediglich der in Figur 2 gezeigte zentrale Vorabscheider 6' auch zur Vorreinigung des an die einzelnen Modul-Rohgasleitungen 22 verteilten Rohgasstromes verwendet werden.

Die bevorzugte Ausführungsform der erfindungsgemäßen Filteranlage 20 besteht jedoch aus zumindest zwei Filtermodulen 1 gemäß Figur 1 bzw. 2, deren Abreinigung jeweils mittels des kombinierten Abreinigungssystems gemäß der Erfindung aus Druckluft- und Saugluftströmung erfolgt.

Die Gesamtzahl der zu einer Filteranlage 20 zusammenzufassenden Filtermodule 1 richtet sich nach der erforderlichen Zeit pro Filtermodul-Abreinigung sowie der Zeitdauer zwischen zwei Abreinigungsvorgängen desselben Filtermoduls 1, wobei diese Zeiten von den jeweiligen Einsatzbedingungen wie Art der Verunreinigung, Beschaffenheit des Filtermediums etc. abhängen.

Ein Beispielwert für die Abreinigungszeit beträgt zehn Sekunden, wobei dasselbe Filtermodul 1 alle vier Minuten abgereinigt werden muß. Von einem einzigen aus Saugeinrichtung 15 und Druckluftquelle bestehenden Abreinigungssystem konstanter Abreinigungsleistung kann somit eine 4 min / 10 sek = 24 Filtermodule umfassende Filteranlage abgereinigt werden.

### Bezugszeichenliste

- 1: Filtermodul
- 2: Gehäuse
- 2 a: Gehäuselängsachse
- 3: Filterelement
- 4: Unterer Filterboden
- 5: Oberer Filterboden
- 6, 6': Vorabscheider
- 7: Einlaß für Rohgas
- 7 a: Zufuhrstutzen
- 8: Absperrorgan
- 9 a: Zylinderabschnitt
- 9 b: Trichterabschnitt
- 10: Endstutzen
- 11: Absaugstutzen
- 11': Zentrale Absaugleitung
- 12: Absaugöffnung
- 12 a: Regelorgan
- 13: Entnahmeschleuse
- 14: Druckluftdüsen
- 15: Saugeinrichtung
- 16: Wartungs- bzw. Druckentlastungsklappe
- 20: Filteranlage
- 21: Rohgasleitung
- 22: Modul-Rohgasleitung
- 26: Gebläse
- 27: Sammeleinrichtung
- 28: Auslaß für Reingasstrom
- 29: Reingasstrom
- 30: Reingasleitung
- 31: Druckluftleitung
- 33: Gebläse
- 34: Regelorgan
- A, B, C: Leitungen

## Patentansprüche

1. Verfahren zum Abreinigen wenigstens eines Filterelementes einer Filteranlage, mit welcher ein insbesondere partikelförmige Verunreinigungen enthaltendes Rohgas gefiltert wird,
dadurch **gekennzeichnet,**
daß die Zufuhr eines Rohgasstromes zum abzureinigenden Filterelement unterbrochen wird und anschließend zuvor herausgefilterte Verunreinigungen zumindest mittels einer Druckluftströmung vom Filterelement gelöst und mittels einer zum Lösen der Verunreinigungen beitragenden Saugluftströmung nach außen abtransportiert werden.

2. Verfahren nach Anspruch 1,
dadurch gekennzeichnet,
daß die Druckluftströmung und die Saugluftströmung im wesentlichen gleichzeitig und gleichgerichtet angewendet werden.

3. Verfahren nach einem der Ansprüche 1 oder 2,
dadurch gekennzeichnet,
daß die Saugluftströmung wesentlich schwächer als die Druckluftströmung eingestellt und die Stärke und / oder die Dauer der Druck- und / oder Saugluftströmung in Abhängigkeit von der Art der Verunreinigungen, der Beschaffenheit und / oder dem Verunreinigungsgrad des Filterelementes festgelegt wird.

4. Filtermodul für eine Filteranlage (20) zum Filtern eines insbesondere partikelförmige Verunreinigungen enthaltenden Rohgases mit einem Gehäuse (2), in dem wenigstens ein Filterelement (3) angeordnet ist und das einen Einlaß (7) für einen zu filternden Rohgasstrom sowie einen Auslaß (28) für einen gefilterten Reingasstrom (29) aufweist,
dadurch **gekennzeichnet,**
daß zur Abreinigung des Filterelementes (3) wenigstens eine Drucklufteinrichtung (14; 31, 34) vorgesehen ist, mit der auf das Filterelement (3) eine Druckluftströmung aufbringbar ist, um Verunreinigungen vom Filterelement (3) zu lösen,
daß das Gehäuse (2) eine mit einer Saugeinrichtung koppelbare Absaugöffnung (12) aufweist, über welche mittels der Druckluftströmung vom Filterelement (3) gelöste Verunreinigungen absaugbar sind,
daß die Drucklufteinrichtung wenigstens eine Druckluftdüse (14) umfaßt, die im Gehäuse (2) angeordnet und mit einer Druckluftquelle koppelbar ist, und
daß die Drucklufteinrichtung eine oberhalb des Filterelementes (3) in das Gehäuse (2) mündende und mit einer Druckluftquelle koppelbare Druckluftleitung (31) sowie ein Regelorgan (34) umfaßt, welches zur Freigabe und Unterbrechung der Strömungsverbindung zwischen Druckluftleitung (31) und Gehäuse (2) umsteuerbar ist, wobei vorzugsweise als Druckluftquelle ein Gebläse (33) vorgesehen ist, welches zumindest einen Teil des Reingasstromes (29) unter Druck über die Druckluftleitung (31) zurück in das Gehäuse (2) treibt.

5. Filtermodul nach Anspruch 4,
dadurch **gekennzeichnet,**
daß das Gehäuse (2) im wesentlichen die Form eines länglichen Hohlzylinders mit kreisförmigem Querschnitt aufweist, in welchem ein oberer (5) und ein unterer (4) sich im wesentlichen senkrecht zur Gehäuselängsachse (2a) erstreckender und vom jeweiligen Gehäuseende in Achsrichtung beabstandeter Zwischenboden vorgesehen sind, wobei sich das Filterelement (3) zwischen den Zwischenböden (4, 5) und im wesentlichen parallel zur Gehäuselängsachse (2a) erstreckt und der Rohgas-Einlaß (7) und die Absaugöffnung (12) im Bereich des unteren Zwischenbodens (4) und der Reingas-Auslaß (28) und die Druckluftdüse (14) im Bereich des oberen Zwischenbodens (5) angeordnet sind, wobei das Filterelement (3) als schlauchartiger Hohlkörper ausgebildet ist, dessen Umfangswand im wesentlichen aus einem Filtermedium besteht und der Rohgas-Einlaß (7) in der Gehäuseseitenwand zwischen den Zwischenböden (4, 5) ausgebildet ist, so daß der zu filternde Rohgasstrom das Filterelement (3) von außen nach innen durchdringt, das Filtermedium im Rohgasstrom enthaltene Verunreinigungen herausfiltert und der gefilterte Reingasstrom im Inneren des Filterelementes (3) in Richtung des oberen Zwischenbodens (5) strömt und durch den Auslaß (28) austritt.

6. Filtermodul nach Anspruch 4 oder 5,
dadurch **gekennzeichnet,**
daß eine Vielzahl von Filterelementen (3) vorgesehen ist, die in wenigstens einem Ring angeordnet sind, wobei insbesondere für jedes Filterelement (3) wenigstens eine Druckluftdüse (14) vorgesehen ist, die im Bereich eines oberen offenen Endes des jeweiligen Filterelementes (3) angeordnet ist und mittels der eine in die entgegengesetzte Richtung wie der Roh- bzw. Reingasstrom wirkende und die herausgefilterten Verunreinigungen vom jeweiligen Filterelement (3) lösende Druckluftströmung erzeugbar ist, und daß im Bereich der Absaugöffnung (12) ein Regelorgan (12a) angeordnet ist, durch welches zur Einstellung der Stärke der Saugluftströmung die Größe der Absaugöffnung (12) veränderbar ist, wobei vorzugsweise an die Absaugöffnung (12) ein Absaugstutzen (11) gekoppelt ist, der mit dem Regelorgan (12a) versehen und an den die Saugeinrichtung anschließbar ist.

7. Filtermodul nach einem der Ansprüche 4 bis 6,
dadurch **gekennzeichnet,**
daß das Gehäuse (2) unterhalb des unteren Zwischenbodens (4) als Vorabscheider (6) zum Abscheiden von Verunreinigungen aus dem eintretenden Rohgasstrom vor dessen Durchgang durch das Filterelement (3) ausgebildet ist und aus einem Zylinderabschnitt (9a) mit vorzugsweise gleichem Querschnitt wie der zwischen den Zwischenböden (4, 5) gelegene Teil des Gehäuses (2) und einem unten an den Zylinderabschnitt (9a) angrenzenden, sich nach unten verjüngenden Trichterabschnitt (9b) besteht, wobei der Rohgas-Einlaß (7) am Zylinderabschnitt (9a) des Gehäuses (2) im oberen Bereich des Vorabscheiders (6) vorgesehen und so ausgebildet ist, daß der zu filternde Rohgasstrom etwa tangential in den Vorabscheider (6) eintritt.

8. Verfahren zum Filtern eines insbesondere partikelförmige Verunreinigungen enthaltenden Rohgases in einer Filteranlage mit Filtermodulen nach den Ansprüchen 4 bis 7,
dadurch **gekennzeichnet,**
daß die Filteranlage (20) in zumindest zwei Filtermodule (1) mit jeweils wenigstens einem Filterelement (3) aufgeteilt und jedem Filtermodul (1) ein Teil eines in die Filteranlage (20) eingeleiteten Rohgasstromes zugeführt wird, und
daß die Filtermodule (1) modulweise nacheinander abgereinigt werden, indem die Zufuhr des Teil-Rohgasstromes zum jeweiligen Filtermodul (1) unterbrochen, anschließend die Abreinigung von dessen Filterelementen (3) durchgeführt und dann die Zufuhr von Rohgas fortgesetzt wird, wobei vor dem Filtern eine Vorreinigung des Rohgasstromes durchgeführt wird, indem entweder jeder Teil-Rohgasstrom mittels eines dem jeweiligen Filtermodul (1) zugeordneten Modul-Vorabscheiders oder der in die Filteranlage (20) eingeleitete Rohgasstrom mittels eines einzigen Haupt-Vorabscheiders vorgereinigt wird.

9. Filteranlage mit wenigstens einem Filterelement (3) zum Filtern eines insbesondere partikelförmige Verunreinigungen enthaltenden Rohgases, der über eine Rohgasleitung (21) ein zu filternder Rohgasstrom zuführbar ist, dadurch **gekennzeichnet,**
daß zumindest zwei Filtermodule (1) mit jeweils wenigstens einem Filterelement (3) vorgesehen sind, daß jedes Filtermodul (1) mit der Rohgasleitung (21) über eine Modul-Rohgasleitung (22) strömungstechnisch verbunden ist, durch die dem jeweiligen Filtermodul (1) ein Teil des Rohgasstromes zuführbar ist,
daß jede Modul-Rohgasleitung (22) ein Absperrorgan (8) aufweist, durch das zur Abreinigung des Filterelementes (3) des jeweiligen Filtermoduls (1) die Zufuhr des jeweiligen Teil-Rohgasstromes unterbrechbar ist, und daß eine zentrale Sammeleinrichtung (27) vorgesehen ist und jedes Filtermodul (1) eine Entnahmeschleuse (13) aufweist, so daß sich in den Filtermodulen (1) angesammelte Verunreinigungen, die insbesondere mittels eines jeweiligen Modul-Vorabscheiders aus den Teil-Rohgasströmen entfernt wurden, der zentralen Sammeleinrichtung (27) zuführbar und von dieser abtransportierbar sind.

10. Filteranlage nach Anspruch 9,
dadurch **gekennzeichnet,**
daß eine Reingasleitung (30) zum Abführen eines gefilterten Reingasstromes (29) vorgesehen ist, daß jedes Filtermodul (1) mit der Reingasleitung (30) über eine Modul-Reingasleitung strömungstechnisch verbunden ist, durch die der aus dem jeweiligen Filtermodul (1) austretende gefilterte Teil-Reingasstrom der Reingasleitung (30) zuführbar ist, und daß die Rohgasleitung (21) mit einem Gebläse (26) versehen ist, welches in Strömungsrichtung vor der ersten Modul-Rohgasleitung (22) angeordnet ist und das zu filternde Rohgas in die einzelnen Filtermodule (1) treibt.
